# EUROPEAN PATENT SPECIFICATION

(11) **EP 0 750 839 B1**
(45) Date of publication and mention of the grant of the patent: **04.04.2001**
(21) Application number: 96830314.9
(22) Date of filing: 04.06.1996
(51) Int. Cl.: A01J 25/12, A01J 25/15

(54) **Method for forming a baked-paste cheese, and apparatus therefor**
Verfahren zur Herstellung von gekochten Käselaiben und Vorrichtung dazu
Méthode de formage d'un fromage à pâte cuite, et appareil pour sa mise en oeuvre

(30) Priority: 29.06.1995 IT RE950032
(43) Date of publication of application: 02.01.1997
(73) Proprietor: CENTRO CASEARIO PIVETTI S.r.l., 42024 Castelnovo Sotto (Reggio Emilia) (IT)
(72) Inventor: Pivetti, James, c/o Centro Caseario Pivetti, 42024 Castelnovo Sotto (RE) (IT)
(74) Representative: Cicogna, Franco

(56) References cited:
- WO-A-96/08961
- FR-A- 1 509 709
- GB-A- 1 062 054
- DATABASE WPI Section Ch, Week 7548 Derwent Publications Ltd., London, GB; Class D13, AN 75-79618W XP002015539 & NL 7 503 378 A (BUTTER & CHEESE IND) , 14 November 1975

## Description

### BACKGROUND OF THE INVENTION

The present invention relates to the baked-paste and/or hard paste cheese dairy field and, more specifically, though not exclusively, it relates to the Parmesan cheese field. Specifically the present invention relates to a device and a method for forming said cheese according to the preamble of claims 1 and 7.

In this field, the cheese making methods were heretofore mainly based on handicraft manual operations, based on the professional skillness of the dairyman or of the dairy shop manager responsible for the production.

The method according to the present invention relates to that step of the cheese forming process which is called "forming", and consisting of providing the dairy mass just withdrawn from the boiler or kier, from which it has been withdrawn in a serum impregnated condition, with the typical cylindric shape.

In prior cheese forming methods, the dairy mass is poured into a cylindric mold through an approximatively funnel-shaped element, or hand-held hopper, the dairy or cheese mass being held in a strong permeable cloth element, the cylindric mold, called "fascera" being made by circularly bending a wood band element supported on a panel, and by superimposing inside the thus made cylinder a side portion of the wood band so as to vary the diameter of the cylinder, and then by encompassing the assembly by a rope or belt element.

For forming the cylindric mold, a micro-permeable plastic laminate material has been also used, said material including, for example, a polytetrafluoro-ethylene material or the like not toxic material, through which are formed a plurality of small holes for providing the mold with the required permeability.

The forming is completed by applying a suitable pressure on the top part of the dairy mass, by means of a weight applied to a top cover; the assembly being supported on a suitably drained wood panel in order to drain the serum percolating on the walls of the thus-pressed dairy mass.

In particular, the cheese molded block is held in the cylindric mold or "fascera" for a time of several tens of hours, during which period the dairyman must perform several processing operations both for replacing the draining fabric cloth and for tilting the cheese block to the other side, in order to provide a perfect draining of the serum: all of these operations must be performed very accurately and at time periods in order to provide an acceptable cheese cylindric block.

The prior method, while performed for hundreds of years in which it was held unchanged with the exception of the use of new not toxic materials like those which are at present typically used in the food field, such as the plastic materials and stainless steel, is however affected by two great drawbacks.

The first drawback is related to the great and stringent requirements of qualified or skilled labour for performing the covering cloth replacement operations, as well as the cheese block reversing and pressing operations.

The second drawback, of like importance, is related to a high error possibility due to the manual nature of the operations, which can cause defects at some regions of the cheese cylindric block, or can allow serum to remain in some inner regions of the cheese. All the mentioned defects, which at present can be eliminated exclusively by a skilled dairyman, can be detected with great difficulties since the negative effects thereof would be evident exclusively after a long time period such as, for example a year, thereby providing a poor quality end cheese product.

The document WO 96 08 961, on which the preamble of the main claim has been based, discloses an apparatus for contemporaneously shaping and pressing a plurality of Grana, cheese forms comprising a support frame, a tank for collecting the curd having movable holed lateral and upper walls, suitable to press and shape the curd under serum and to end the drainage of the serum, a tank to contain the serum, provided external with respect to the curd collecting tank, a platform having the bottom holed to drain the serum, horizontal trust means of the pressed and shaped caseous mass coming out from the collecting tank, cut means for the caseous mass coming out from the collecting mass so as to obtain single cheese, drawing means for the single cheese obtained, and control means to operate the various component.

### SUMMARY OF THE INVENTION

Accordingly, the aim of the present invention is to overcome the above mentioned drawbacks, by providing a cheese making method, and related apparatus, suitable to greatly reduce, or eliminate, the required manual labour as well as to substantially overcome the surface and inner defects of the cheese block, thereby greatly improving the cheese making method and the end obtained cheese product.

Within the scope of the above mentioned aim, a main object of the present invention is to provide such a cheese making method which is provided very good hygienic characteristics and is adapted to preserve the typical organoleptic properties of the cheese product and which, moreover, provides cheese cylindric blocks of even configuration and, in particular, even height.

The present invention, as characterized in claims 1 and 7, achieves the above mentioned aim and objects by subjecting the cheese or dairy mass, poured into a known type of cylindric mold made of a microperforated material, to a series of mechanical shrinking, or belting, stresses, as well as to subsequent settling axial stresses, which are applied during the shrinking periods of the cheese mass, as well as to additional stresses comprising tangential pulse forces and vibrations through the overall cheese mass. And this on both the bearing sides of the cheese cylindric block, tilting or reversing means being moreover provided for reversing the cylindric cheese block through 180°.

The apparatus for carrying out the above disclosed method comprises a flat table of a microperforated plastic material supported by turning means for turning it through 180° with respect to a horizontal axis, and provided with driven or motorized means for providing opposite forces, both of a continuous and of a pulse type, to the closure flaps of the cylindric mold or "fascera", as well as a motorized removable cover, or counter-table, provided for adhering to the top edge of the cylindric mold to define therein a cylindric volume having microporous walls. The assembly is supported by a supporting construction to which vibrations means can be applied, the several operating steps being controlled through an electronic or electric programming panel.

### BRIEF DESCRIPTION OF THE DRAWINGS

The invention will become more apparent hereinafter from the following disclosure of a preferred, though not limitative, embodiment thereof, with reference to the accompanying drawings.

This embodiment is shown with respect to an apparatus for producing or making simultaneously two cheese cylindric blocks, since, generally, from a single dairy mass two cheese cylindric blocks are usually made.

In the drawings:

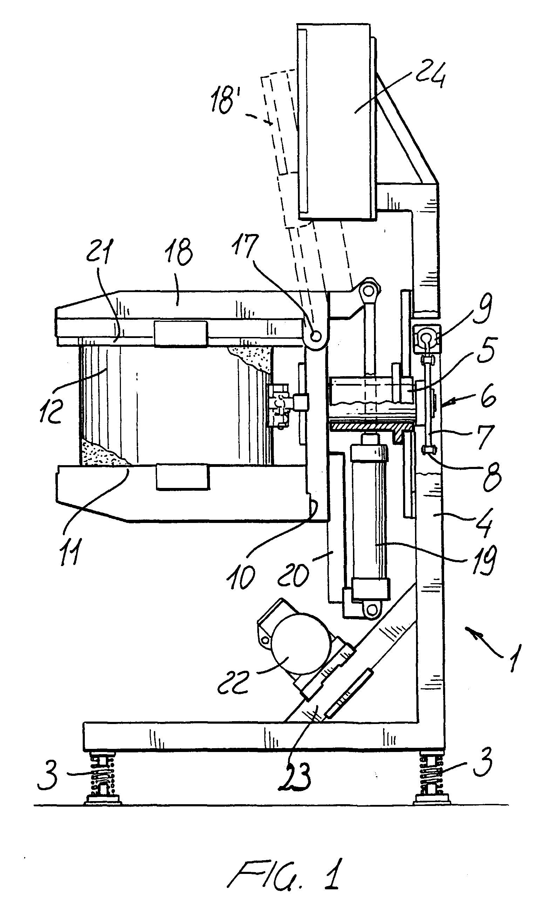

Figure 1 is a side view illustrating a cheese making apparatus according to the present invention;

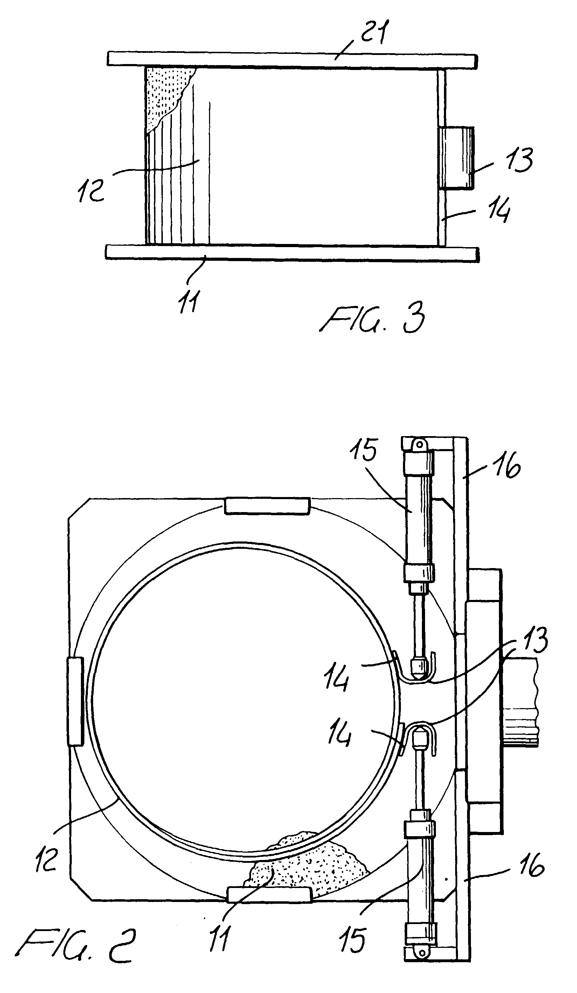

Figure 2 is a top plan view illustrating the processing table of a cheese cylindric block, as performed in a cheese making apparatus according to the present invention;
Figure 3 is a perspective view showing the mentioned processing table and related cylindric mold or "fascera";

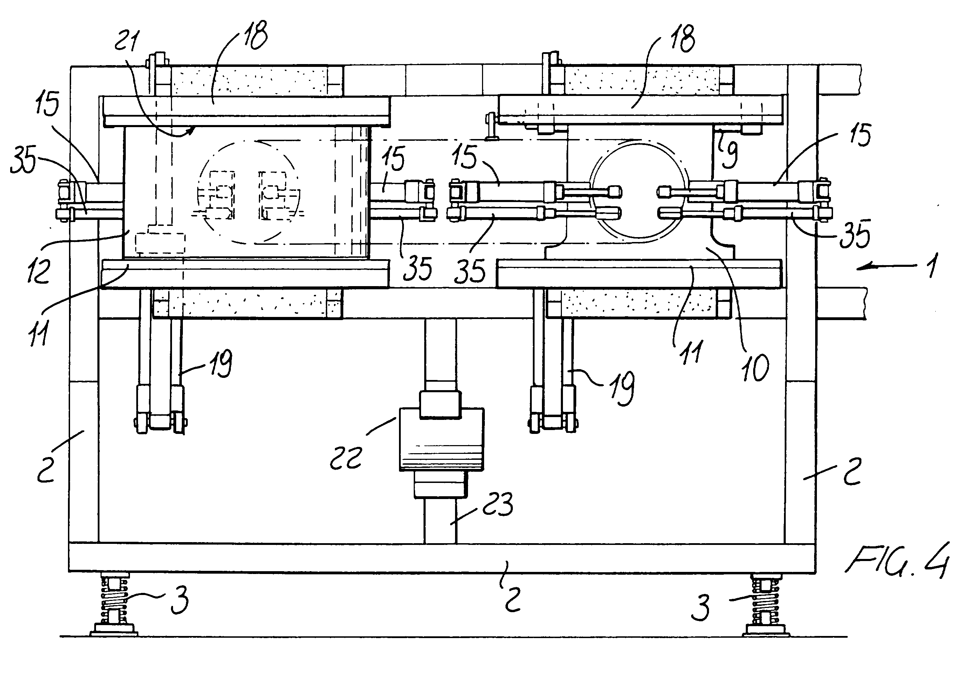

Figure 4 is a front view showing an apparatus for making two cheese cylindric blocks, according to the present invention, and made by coupling two like modular elements;

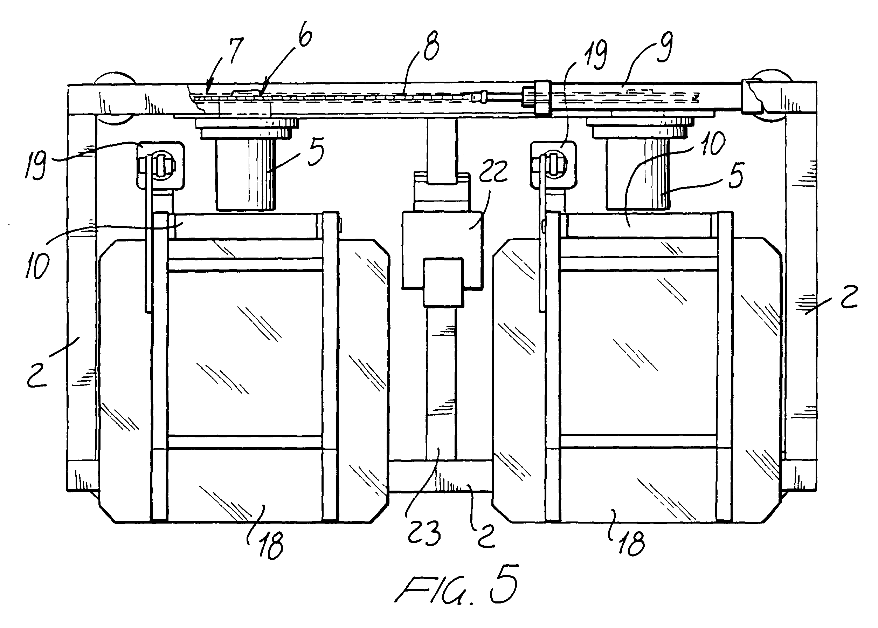

Figure 5 is a top plan view of the two-element cheese making apparatus; and
Figures 6/a, 6/b, 6/c. etc. are schematic views illustrating the main mechanical stress operations applied to the dairy mass during the cheese making process.

### DESCRIPTION OF THE PREFERRED EMBODIMENTS

With reference to the drawing figures, the reference number 1 indicates herein a cheese making apparatus made according to the present invention; 2 indicates a strong quadrangular base frame having a rised portion, of substantially L-shape and bearing on the floor through the interposition of resilient means 3.

The reference number 4 shows a strong plate rigid with the frame 2 and supporting a sleeve 5 operating for guiding and supporting rotatively a shaft 6, according to a horizontal axis.

A gear wheel 7 is rigidly supported on the shaft 6, and on said gear wheel is entrained a driving chain 8 driven by driving means 9 comprising an operating cylinder which is driven by any suitable operating fluid.

The reference number 10 indicates a substantially L-shaped frame the vertical part of which is rigid with the rotary shaft 6 and the horizontal part of which operates as a support element for supporting a cheese block supporting panel 11, made of any known microperforated rigid material, such as, for example, a not-toxic polytetrafluoroethylene material, or a microperforated stainless steel material.

The reference number 12 indicates a cylindric mold or "fascera" of even height made of any suitable microperforated material, on the outer circumference of which, at the superimposition region, are applied two hook elements 13 which are fixedly connected to the mold by means of a rib element 14 extending through the overall height.

On the hook elements 13 are engaged, in opposite directions, two hydraulic pistons 15, of the double action type, which are anchored in the bottom portion thereof by means of hinges to corresponding brackets 16 rigid with the rotary frame 10.

At a parallel position and underlaying the pistons 15 are provided corresponding pistons 35, having a smaller size, which can be anchored in a like manner to the pistons 15 between a hinge rigid with the bracket 16 and a hook element rigid with the end portions of the mold 12.

At the upper portion of the frame 10 a hinge 17 is provided on which is articulately engaged a cover 18 which can be rised from the closed horizontal position thereof to the opened position 18' thereof by operating an hydraulic piston 19 also engaged by hinge means to the frame 10 through a bracket 20. This cover 18 bears, in its bottom portion contacting the mold 12, a microperforated material panel 21, like to the bottom panel 11.

The reference number 22 indicates a vibrating element, for example of an electromechanic type, which is connected to the main frame 2 on a cross beam 23.

Finally, the reference number 24 indicates control electric/electronic panels for programming the operation of the overall apparatus.

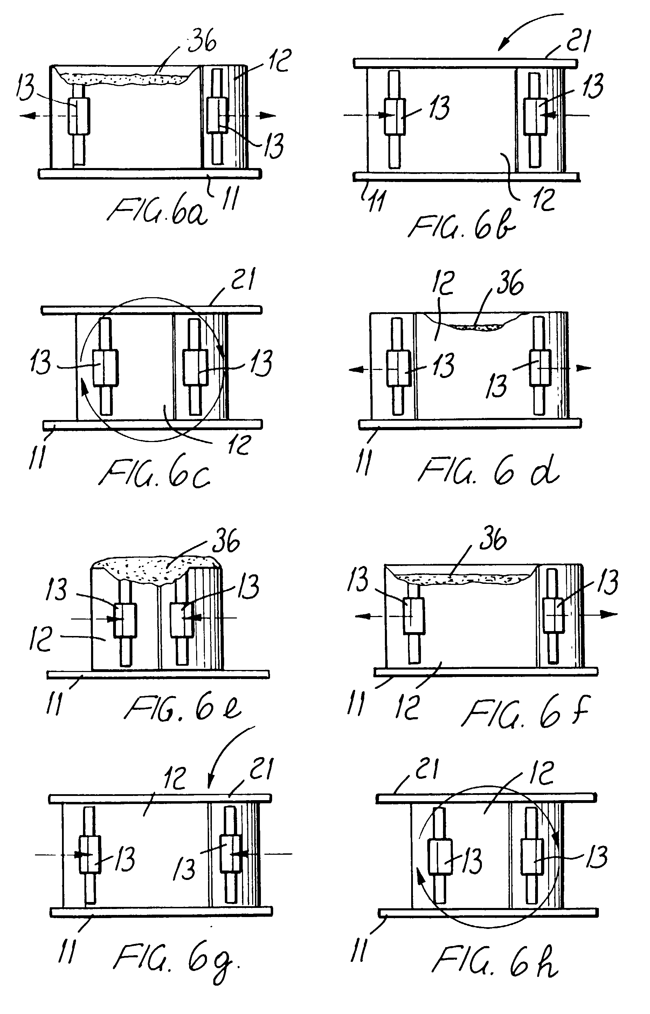

Figures 6 illustrates, by a sequential view arrangement, and in a schematic and symbolic representation, the several steps of the subject method. In particular, figure 6/a illustrates the first step of the method, in which the mold 12 is provided in an expanded configuration, according to the opening indicated by the arrows, the cover 18 being raised, and accordingly not shown, and the dairy mass 36 being poured inside the mold to a filling level less than the top edge of the mold.

Figure 6/b illustrates the subsequent steps in which the mold is closed by a belting arrangement as indicated by the arrows and this being obtained by operating the pistons 15 on the hook elements 13, jointly with the top closure obtained by causing the cover 18 to lower.

In this step is provided that the operation of the pistons 15 to belt-close the mold 12 is integrated with the cperation of the additional pistons 35 for applying pulse forces such as hammer impacts to overcome possible lockings of the mold flaps in the region where they are superimposed, under the effect of friction between said mold flaps.

Figure 6/c shows a subsequent operating step in which the cheese mass or block held in the cylindric mold is reversed through 180°, this reversing operation being performed by means of the chain 8 entrained on the gear wheel 7 rigid with the axis or shaft 6 thereon the frame 10 turns.

Figure 6/d shows a further operating step in which the cylindric mold is released, in the direction indicated by the arrows, this step being performed after having held for a suitable time period the cheese block under the conditions of the preceding steps, and after a new reversing operation, in which the cheese is reversed again through 180° by the above disclosed reversing means.

Under these conditions, the cheese or dairy mass is distended according to a height less than the height of the edge of the cylindric mold.

Figure 6/e illustrates yet another subsequent operating step in which the dairy of cheese mass is shrinked by causing the hook elements 13 to move towards one another in the direction of the arrows, this operation being performed so as to cause the cheese mass to just overflow the top edge of the cylindric mold.

Figure 6/f shows yet another subsequent operating step in which the cheese mass or block is distended in a like manner to the step 6/d.

This operating step is followed by the following operating step 6/g in which the cover 18 and related panel 21 are closed, and in which the dairy or cheese mass is belted by causing the hook element 13 to move towards one another as indicated by the arrows.

Finally, figure 6/h shows yet another subsequent operating step in which the cheese block or mass is reversed through 180° in order to continue the process operating sequence.

In order to favour the inner setting of the cheese mass grains, it is provided to also apply mechanical vibrations to said cheese mass by actuating for a programmed period of time the vibrator 22.

This main vibration operation is enhanced by the elastic supporting elements 3 arranged between the frame of the construction 2 and the floor.

The durations of the several steps 6/a, 6/b, 6/c, etc. as schematically above illustrated will be selected depended on the type or nature of the cheese to be processed, and correspondingly to the duration of like operations which were manually performed in prior art methods.

By way of an example, the duration time of the belting steps 6/b, 6/g will be of about 30 minutes; the duration time of the 180° reversing step will be of 120 minutes, the duration time of the settling steps 6/d, 6/e, 6/f being of few tens of seconds.

According to one aspect of the invention, it is provided that the repetition of the processing sequence, and the duration of each operating step would be automatically controlled by a process program in turn driven and controlled by the electric/electronic panel 24 by means of known programming and controlling equipment.

The disclosed apparatus operates as follows.

After having manually filled to a set not full height of the cylindric mold 12, as schematically shown in figure 6/a, the operator will connect the pistons 15, 35 to their hook elements 13 and will start the automatic process controlled by the program stored in the panel 24.

Then, the cover 18 and related draining panel 21 will be caused to lower; the belting of the dairy mass obtained by the opposite actions of the pistons 15, with the application of mechanical pulses by the pistons 35 will be performed accordingly to the diagram of figure 6/b.

During this belting step, the vibrator 22 will be actuated so as to apply to the dairy mass the set vibrations.

The thus applied mechanical stress will cause serum to exit the dairy mass, and the overall mass to be properly homogenized. The serum will be drained outside both through the walls of the cylindric mold and through the bottom and top closure panels 11 and 21 associated with the mold.

The reversing through 180° of the cheese mass or block will be performed by operating for a set stroke the piston 9, to cause the gear wheel 7 rigid with the shaft 6 supporting the frame 10 to turn through 180°.

If the height of the cheese block or mass must be changed, then this variation can be performed by replacing the mold by another mold having the desired height, and by interposing a support element of suitable thickness on the panel 11 or on the panel 21.

In this connection it should be apparent that the mechanical processing steps applied to the cheese mass can be changed, both with respect to the duration of said processing steps and with respect to their operating order, provided that the belting step to a confined volume and the cyclic reversing step through 180° be held as disclosed. The application of impulsive forces in addition to the belting step, as disclosed in the above illustrated example, by means of specialized fluidodynamic means (35) can be alternatively perfored by using the motorized elements (15) for closing/opening the mold, for example by applying pressure pulses to the operating fluid of these elements.

It should be moreover apparent that the above disclosed apparatus can further include auxiliary devices, such as, for example, safety, signalling, alarm and so on devices, according to the prior art and which have not been herein shown.

## Claims

1. A method for forming cheese of the baked paste and/or hard paste type in general, in which the dairy mass is poured into a cylindric mold (12) made of a microperforated material and having superimposable side flaps, said mold (12) being provided with circumferential outer means (13) for closing, belting and enlarging said mold (12) and with two microperforated flat panels (11, 21) for closing said mold (12) at the bottom and top thereof, characterized in that said cylindric mold is reversed through 180° on a horizontal axis, in that said circumferential outer means (13) for closing/belting and enlarging said cylindrical mold (12) comprise hook elements (13) being arranged on the outer circumference of the cylindrical mold (12) at the superimposition zone, on which are engaged, in opposite directions, two hydraulic pistons (15), of the double action type, said pistons (15) causing the hook elements (13) to move towards one another, subjecting the mold (12) to a controlled closing pushing operation, or to move apart from another, subjecting the mold (12) to a controlled opening pulling operation, and in that said dairy mass is subjected, even in a not ordered sequence, and even in a repeated sequence, to the following processing steps:
- a belting compression by causing a circumferential variation of the volume enclosed by said top and bottom panels, said circumferential variations being performed by said two hydraulic pistons (15) operating in a direction which is tangentially opposite to the circumference of said mold (12) at the superimposition zone of said mold flaps; and
- a rotation through 180° of said two microperforated flat panels (11, 21) with said mold (12) arranged therebetween.

2. A method according to Claim 1,
characterized in that during said compression mechanical vibration stresses, even of a discontinue nature, are applied to said dairy mass.

3. A method according to Claim 1,
characterized in that after said compression step a further operating step is performed in which said mold (12) is enlarged by causing said mold to distend followed by a subsequent compression step.

4. A method according to Claim 1, characterized in that after said compression step is performed a further operating step in which said mold (12) is enlarged by causing said mold to distend, followed by a further belting step to a volume not confined at the top, and followed by a subsequent distending step.

5. A method according to Claim 1,
characterized in that during said belting compression to a confined volume step to said mold (12) are tangentially applied pulse forces in addition to the forces applied by said two hydraulic pistons (15).

6. A method according to Claim 1,
characterized in that at least a portion of the processing steps are controlled by an automatic program (24).

7. An apparatus for forming baked paste and/or hard paste cheese, said apparatus comprising a cylindric mold (12) made of a microperforated material and having superimposable side flaps, said mold (12) being provided with circumferential outer means (13) for closing, belting and enlarging said mold (12), and with microperforated flat panels (11, 21) for closing said mold at the top and bottom thereof, characterized in that said mold is reversed through 180° on a horizontal axis, in that said circumferential outer means (13) for closing/belting and enlarging said cylindrical mold (12) comprise hook elements (13) being arranged on the outer circumference of the cylindrical mold (12) at the superimposition zone, on which are engaged, in opposite directions, two hydraulic pistons (15), of the double action type, said pistons (15) causing the hook elements (13) to move towards one another, subjecting the mold (12) to a controlled closing pushing operation, or to move apart from another, subjecting the mold (12) to a controlled opening pulling operation, and in that
- the top panel (21) for closing said mold (12) is mechanically removable under a motorized drive;
- and that the assembly constituted by the bottom panel (11) and top panel (21) is connected to horizontal axis rotary means (5, 6) providing a rotary movement through at least 180°.

8. An apparatus according to Claim 7, characterized in that on said belting means (13) impulsive force applying means (35) operate, said means also operating during the closing step of said mold (12).

9. An apparatus according to Claim 7,
characterized in that said horizontal axis rotary means (5, 6) comprise driving means (19, 15, 35, 22).

10. An apparatus according to Claim 7,
characterized in that it comprises a base frame (2) supporting said apparatus, said base frame is supported on a floor through resilient means.

11. An apparatus according to Claim 7,
characterized in that on a constructional portion of said apparatus are arranged mechanically vibrating driven means (22).

12. An apparatus according to Claim 9,
characterized in that at least a portion of said motorized means (19, 15, 35, 22) is driven under the control of an automatically programmed system.

## Patentansprüche

1. Verfahren zur Herstellung von gekochten Käselaiben und/oder harten Käselaiben im allgemeinen, wobei die Milchproduktmasse in eine zylindrische Gießform (12) gegossen wird, die aus einem Material mit Mikroperforation besteht und übereinanderklappbare Seitenklappen aufweist, wobei die Gießform (12) mit äußeren Umfangsmitteln (13) zum Schließen, Zusammenhalten und Vergrößern der Gießform (12), sowie mit zwei flachen Platten (11,21) mit Mikroperforation versehen ist, die die Gießform (12) unten und oben verschließen,
**dadurch gekennzeichnet**, daß
die zylindrische Gießform auf einer horizontalen Achse um 180° gedreht wird, daß die äußeren Umfangsmittel (13) zum Schließen/Zusammenhalten und Vergrößern der zylindrischen Gießform (12) Hakenelemente (13) aufweisen, die am äußeren Umfang der zylindrischen Gießform (12) an der Überlagerungszone angeordnet sind, mit denen in entgegengesetzten Richtungen zwei doppeltwirkende Hydraulikkolben (15) in Eingriff stehen, wobei die Kolben (15) die Hakenelemente (13) dazu veranlassen, sich aufeinander zuzubewegen, wobei sie die Gießform (12) zu einem kontrollierten Schließ-Drückvorgang oder dazu veranlassen, sich voneinander wegzubewegen, indem sie die Gießform (12) zu einem kontrollierten Öffnungs-Ziehvorgang veranlassen, und daß die Milchmasse selbst nicht in geordneter Reihenfolge und selbst bei wiederholter Folge, den folgenden Verarbeitungsschritten unterzogen wird:
- einer Zusammenhaltekompression durch Veranlassung einer Umfangsveränderung des durch die oberen und unteren Platten eingeschlossenen Volumens, wobei die Umfangsveränderungen durch die zwei Hydraulikkolben (15) ausgeführt werden, die in einer Richtung wirken, die dem Umfang der Gießform (12) an der Überlagerungszone der Gießformklappen tangential entgegengesetzt ist; und
- einer Drehung von zwei flachen Platten (11,21) mit Mikroperforation mit der dazwischen angeordneten Gießform (12) um 180°.

2. Verfahren nach Anspruch 1,
**dadurch gekennzeichnet**, daß
während der Kompression mechanische Vibrationsbelastungen, auch mit Unterbrechungen, auf die Milchmasse aufgebracht werden.

3. Verfahren nach Anspruch 1,
**dadurch gekennzeichnet**, daß
nach dem Kompressionsschritt ein weiterer Betriebsschritt ausgeführt wird, bei dem die Gießform (12) vergrößert wird, indem die Gießform dazu veranlaßt wird, sich auszudehnen, worauf ein Kompressionsschritt folgt.

4. Verfahren nach Anspruch 1,
**dadurch gekennzeichnet**, daß
nach dem Kompressionssschritt ein weiterer Betriebsschritt ausgeführt wird, bei dem die Gießform (12) vergrößert wird, indem die Gießform dazu veranlaßt wird, sich auszudehnen, worauf ein weiterer Zusammenhalteschritt auf ein Volumen folgt, das oben nicht begrenzt ist, worauf ein Ausdehnungsschritt folgt.

5. Verfahren nach Anspruch 1,
**dadurch gekennzeichnet**, daß
während der Zusammenhaltekompression mit einem Schritt mit begrenztem Volumen auf die Gießform (12) tangential Impulskräfte zusätzlich zu den durch die zwei Hydraulikkolben (15) aufgebrachten Kräfte aufgebracht werden.

6. Verfahren nach Anspruch 1,
**dadurch gekennzeichnet**, daß
mindestens ein Teil der Verarbeitungsschritte durch ein Automatikprogramm (24) gesteuert wird.

7. Vorrichtung zur Herstellung von gekochten Käselaiben und/oder harten Käselaiben, welche eine zylindrische Gießform (12) aufweist, die aus einem Material mit Mikroperforation besteht und übereinanderklappbare Seitenklappen aufweist, wobei die Gießform (12) mit äußeren Umfangsmitteln (13) zum Schließen, Zusammenhalten und Vergrößern der Gießform (12), sowie mit zwei flachen Platten (11,21) mit Mikroperforation versehen ist, die die Gießform (12) oben und unten verschließen,
**dadurch gekennzeichnet**, daß
die zylindrische Gießform auf einer horizontalen Achse um 180° gedreht wird, daß die äußeren Umfangsmittel (13) zum Schließen/Zusammenhalten und Vergrößern der zylindrischen Gießform (12) Hakenelemente (13) aufweisen, die am äußeren Umfang der zylindrischen Gießform (12) an der Überlagerungszone angeordnet sind, mit denen in entgegengesetzten Richtungen zwei doppeltwirkende Hydraulikkolben (15) in Eingriff stehen, die die Hakenelemente (13) dazu veranlassen, sich aufeinander zuzubewegen, wobei sie die Gießform (12) zu einem kontrollierten Schließ-Drückvorgang oder dazu veranlassen, sich voneinander wegzubewegen, indem sie die Gießform (12) zu einem kontrollierten Öffnungs-Ziehvorgang veranlassen, und daß
- die obere Platte (21) zum Schließen der Gießform (12) unter Einwirkung eines Motorantriebes mechanisch entfernbar ist;
- und daß die aus der unteren Platte (11) und der oberen Platte (21) bestehende Baugruppe mit Horizontalachsendrehmitteln (5,6) verbunden ist, die eine Drehbewegung um mindestens 180° bieten.

8. Vorrichtung nach Anspruch 7,
**dadurch gekennzeichnet**, daß
auf den Zusammenhaltemitteln (13) Impulskräfte aufbringende Mittel (35) wirken, wobei die Mittel auch während dem Schließschritt der Gießform (12) arbeiten.

9. Vorrichtung nach Anspruch 7,
**dadurch gekennzeichnet**, daß
die Horizontalachsendrehmittel (5,6) Antriebsmittel (19,15,35,22) aufweisen.

10. Vorrichtung nach Anspruch 7,
**dadurch gekennzeichnet**, daß
sie einen Grundrahmen (2) aufweist, der die Vorrichtung trägt, wobei der Grundrahmen auf einem Boden durch federnde Mittel getragen ist.

11. Vorrichtung nach Anspruch 7,
**dadurch gekennzeichnet**, daß
auf einem Bauteil der Vorrichtung mechanisch vibrierende, angetriebene Mittel (22) angeordnet sind.

12. Vorrichtung nach Anspruch 9,
**dadurch gekennzeichnet**, daß
mindestens ein Teil der motorisierten Mittel (19, 15,35,22) von einem automatisch programmierten System gesteuert angetrieben wird.

## Revendications

1. Méthode de formage d'un fromage en général du type à pâte cuite et/ou à pâte dure, dans laquelle la quantité de lait est versée dans un moule cylindrique (12) réalisé dans un matériau micro-perforé et présentant des volets latéraux superposables, ledit moule (12) étant muni de moyens extérieurs circonférenciels (13) pour la fermeture, le serrage et l'élargissement dudit moule (12) et muni de deux panneaux plats micro-perforés (11, 21) pour la fermeture dudit moule (12) à son extrémité inférieure et à son extrémité supérieure, caractérisée en ce que ledit moule cylindrique est renversé de 180° sur un axe horizontal, en ce que lesdits moyens extérieurs circonférenciels (13) pour la fermeture / le serrage et l'élargissement dudit moule cylindrique (12) comprennent des éléments de type crochet (13) qui sont disposés sur la périphérie extérieure dudit moule cylindrique (12) vers la zone de superposition, sur laquelle sont engagés, dans des directions opposées, deux pistons hydrauliques (15), du type à double effet, lesdits pistons (15) provoquant le déplacement l'un vers l'autre des éléments de type crochet (13), ce qui soumet le moule (12) à une opération contrôlée de poussée de fermeture, ou leur déplacement en s'éloignant l'un de l'autre, ce qui soumet le moule (12) à une opération contrôlée de traction d'ouverture, et en ce que la dite quantité de lait est soumise, même dans une séquence non ordonnée, et même dans une séquence répétée, aux étapes suivantes de procédé :
- une compression de serrage, en provoquant une variation circonférencielle du volume délimité par lesdits panneaux d'extrémités supérieur et inférieur, lesdites variations circonférencielles étant obtenues par lesdits deux pistons hydrauliques (15) agissant dans une direction qui est tangentiellement opposée à la périphérie dudit moule (12) vers la zone de superposition desdits volets du moule ; et
- une rotation de 180° desdits deux panneaux plats micro-perforés (11, 21) ledit moule (12) étant disposé entre eux.

2. Méthode selon la revendication 1, caractérisée en ce que pendant la dite compression, des contraintes mécaniques vibratoires, même de nature discontinue, sont appliquées à la dite quantité de lait.

3. Méthode selon la revendication 1, caractérisée en ce que après la dite étape de compression, une étape suivante de commande est effectuée, dans laquelle ledit moule (12) est élargi en provoquant l'extension dudit moule, suivie par une étape ultérieure de compression.

4. Méthode selon la revendication 1, caractérisée en ce que après la dite étape de compression, est effectué une autre étape de commande, dans laquelle ledit moule (12) est élargi en provoquant l'extension dudit moule, suivie par une autre étape de serrage jusqu'à un volume qui n'est pas confiné vers l'extrémité supérieure, et suivie par une étape ultérieure d'extension.

5. Méthode selon la revendication 1, caractérisée en ce que pendant la dite étape de compression de serrage dudit moule (12) jusqu'à un volume confiné, sont appliquées tangentiellement des forces d'impulsion en addition aux forces appliquées par lesdits deux pistons hydrauliques (15).

6. Méthode selon la revendication 1, caractérisée en ce que au moins une partie des étapes du procédé sont commandées par un programme automatique (24).

7. Appareil pour le formage de fromage à pâte cuite et/ou à pâte dure, ledit appareil comprenant un moule cylindrique (12) réalisé dans un matériau micro-perforé et présentant des volets latéraux superposables, ledit moule (12) étant muni de moyens extérieurs circonférenciels (13) pour la fermeture, le serrage et l'élargissement dudit moule (12), et muni de panneaux plats micro-perforés (11, 21) pour la fermeture dudit moule à ses extrémités supérieure et inférieure, caractérisé et en ce que ledit moule est renversé de 180° sur un axe horizontal, en ce que lesdits moyens extérieurs circonférenciels (13) pour la fermeture / le serrage et l'élargissement dudit moule cylindrique (12) comprennent des éléments de type crochet (13) qui sont disposés sur la périphérie extérieure du moule cylindrique (12) vers la zone de superposition, sur laquelle sont engagés, dans des directions opposées, deux pistons hydrauliques (15), du type à double effet, lesdits pistons (15) provoquant le déplacement l'un vers l'autre des éléments de type crochet (13), ce qui soumet le moule (12) à une opération contrôlée de poussée de fermeture, ou leur déplacement en s'éloignant l'un de l'autre, ce qui soumet le moule (12) à une opération contrôlée de traction d'ouverture, et en ce que
- le panneau supérieur (21) pour la fermeture dudit moule (12) est retirable mécaniquement sous commande motorisée ;
- et en ce que l'assemblage constitué par le panneau inférieur (11) et le panneau supérieur (21) est relié à des moyens de rotation autour d'un axe horizontal (5,6), ce qui fournit un mouvement en rotation d'au moins 180°.

8. Appareil selon la revendication 7, caractérisé en ce que sur lesdits moyens de serrage (13) agissent des moyens d'application de forces impulsives (35), lesdits moyens agissant également pendant l'étape de fermeture dudit moule (12).

9. Appareil selon la revendication 7, caractérisé en ce que lesdits moyens de rotations autour d'un axe horizontal (5,6) comprennent des moyens de commandes (19, 15, 35, 22).

10. Appareil selon la revendication 7, caractérisé en ce qu'il comprend un bâti (2) supportant ledit appareil, ledit bâti étant supporté sur un sol par des moyens élastiques.

11. Appareil selon la revendication 7, caractérisé en ce que sur une partie constructionnelle dudit appareil sont disposés des moyens de commandes de vibrations mécaniques (22).

12. Appareil selon la revendication 9, caractérisé en ce qu'au moins une partie desdits moyens motorisés (19, 15, 35, 22) est commandée sous le contrôle d'un système automatiquement programmé.
